# EUROPÄISCHE PATENTSCHRIFT

(11) **EP 2 057 961 B1**
(45) Veröffentlichungstag und Bekanntmachung des Hinweises auf die Patenterteilung: **31.12.2014**
(21) Anmeldenummer: 08105747.3
(22) Anmeldetag: 07.11.2008
(51) Int. Cl.: A61C 1/07, A61C 17/20

(54) **Verfahren zum Betrieb einer dentalen Ultraschallvorrichtung sowie dentale Ultraschallvorrichtung**
Method for operating a dental ultrasonic device and dental ultrasonic device
Procédé de fonctionnement d'un dispositif à ultrasons dentaire tout comme dispositif à ultrasons dentaire

(30) Priorität: 07.11.2007 DE 102007053460
(43) Veröffentlichungstag der Anmeldung: 13.05.2009
(73) Patentinhaber: Sirona Dental Systems GmbH, 64625 Bensheim (DE)
(72) Erfinder: Rein, Matthias, 64653, Lorsch (DE)
(74) Vertreter: Sommer, Peter

(56) Entgegenhaltungen:
- EP-A- 0 411 473
- EP-A- 1 818 022
- EP-A- 1 825 931
- DE-A1- 2 559 199

## Beschreibung

Die Erfindung betrifft ein Verfahren zum Betrieb einer dentalen Ultraschallvorrichtung, umfassend ein Handstück, einen Ultraschallantrieb mit einer veränderbaren Ausgangsfrequenz, eine von dem Ultraschallantrieb angetriebene bzw. antreibbare Werkzeugspitze und eine Regelungseinheit, die zur Regelung der Ausgangsfrequenz des Ultraschallantriebes dient.

Die Erfindung betrifft weiterhin eine dentale Ultraschallvorrichtung, umfassend ein Handstück, einen Ultraschallantrieb mit einer veränderbaren Ausgangsfrequenz, eine Werkzeugaufnahme für eine von dem Ultraschallantrieb antreibbare Werkzeugspitze und eine Regelungseinheit, die zur Regelung der Ausgangsfrequenz des Ultraschallantriebes dient.

### Stand der Technik

Bei einem Schwingungssystem bestehend aus einer dreidimensional geformten Ultraschall-Werkzeugspitze und einem Ultraschallantriebssystem sind bei unterschiedlichen Anregungs- bzw. Resonanzfrequenzen verschiedene Schwingungsmodi festzustellen. Die jeweils angeregten Schwingungsmodi verlaufen dabei in unterschiedlichen Raumachsen. Bei einer dreidimensional geformten Werkzeugspitze sind in der Regel mindestens drei Resonanzfrequenzen festzustellen, deren jeweilige Schwingungsrichtung in der Regel einer der drei Raumrichtungen zuzuordnen ist.

Die EP 1 818 022 A1 offenbart eine Vorrichtung und ein Verfahren zum Betrieb eines ultraschallgetriebenen Werkzeugs, wobei eine Auswahleinrichtung zur Auswahl eines Betriebszustandes des Ultraschallsystems vorgesehen ist. Weiterhin weist die Ultraschallvorrichtung einen Antrieb sowie eine Antriebselektronik auf, wobei die Antriebselektronik den Antrieb in Abhängigkeit der mit der Auswahleinrichtung getroffenen Auswahl steuert.

Die EP 1 825 931 A1 offenbart ein Verfahren zum Betrieb einer dentalen Ultraschallvorrichtung sowie eine dentale Ultraschallvorrichtung, wobei bei der Inbetriebnahme der Ultraschallvorrichtung ein Frequenzbereich durchfahren wird, um eine Resonanzfrequenz einer verwendeten Ultraschall-Werkzeugspitze zu bestimmen und dann den Ultraschallantrieb auf eine der Resonanzfrequenz entsprechenden Antriebsfrequenz zu regeln.

Die DE 600 01 416 T2 offenbart eine Kontrollvorrichtung für ein zahnärztliches Ultraschallhandstück, die einen piezoelektrischen Transducer eines Schwingungserzeugers des Handstücks regelt. Die Vorrichtung ist in der Lage, die Serienresonanzfrequenz unabhängig von der Art des Gewebes, an welches das Instrument herangeführt wird, zu halten. Dafür sind zwei Stromkreise vorgesehen, ein Arbeitsstromkreis und ein Steuerstromkreis, wobei der Steuerstromkreis die Phasenverschiebung zwischen Strom und Spannung misst und elektrisch kompensiert.

Bei Einsatz einer Ultraschall-Werkzeugspitze ist es notwendig, die Ultraschall-Werkzeugspitze derart relativ zum Zahn auszurichten, dass die Schwingungsrichtung der Ultraschallbewegung in tangentialer Richtung zum Zahn verläuft.

Es ist daher die Aufgabe der Erfindung, ein Verfahren zum Betrieb einer dentalen Ultraschallvorrichtung und eine Ultraschallvorrichtung anzugeben, die eine Einstellung einer optimalen Schwingungsrichtung gewährleisten.

### Offenbarung der Erfindung

Durch das erfindungsgemäße Verfahren, also die Ermittlung von zwei sich unter Belastung während des Einsatzes der dreidimensional geformten, zwei Resonanzfrequenzen R1, R2 für unterschiedliche Schwingungsrichtungen X, Y aufweisenden Werkzeugspitze einstellenden Impedanzwerten IB1, IB2 bzw. Phasenwerten ϕB1, ϕB2 zwischen dem Strom I und der Spannung U des Ultraschallantriebs für die zwei Resonanzfrequenzen R1, R2 der Werkzeugspitze, den Vergleich der Impedanzwerte IB1, IB2 bzw. Phasenwerte ϕB1, ϕB2 mit zumindest zwei für die beiden Resonanzfrequenzen R1, R2 im Leerlauf ermittelten Impedanzwerten IL1, IL2 bzw. Phasenwerten ϕL1, ϕL2, die Einstellung derjenigen Resonanzfrequenz R1, R2 als Ausgangsfrequenz, bei der eine Abweichung A1, A2 zwischen dem Impedanzwert IB1, IB2 bzw. Phasenwert ϕB1, ϕB2 und den zugehörigen Impedanzwerten IL1, IL2 bzw. Phasenwerten ϕL1, ϕL2 kleiner ist oder ein Quotient Q1, Q2 von dem jeweiligen Impedanzwert IB1, IB2 zu dem zugehörigen Impedanzwert IL1, IL2 bzw. dem jeweiligen Phasenwert ϕL1, ϕL2 zu dem zugehörigen Phasenwert ϕB1, ϕB2 am kleinsten ist, wird erreicht, dass die Bewegungs- bzw. Schwingungsrichtung der Ultraschall-Werkzeugspitze stets tangential zum Zahn verläuft, unabhängig davon, wie der Anwender die Werkzeugspitze relativ zum Zahn positioniert.

Da die Phase im Belastungsfall im Gegensatz zur Impedanz abfällt, muss bei der Betrachtung des kleinsten Quotienten bei der Phase der Kehrwert, also der Leerlaufwert L zum Belastungswert B berücksichtigt werden.

Sobald eine Dämpfung bzw. eine Schwingungsrichtung X normal zum Zahn generiert wird, erfolgt ein Wechsel der Anregungsfrequenz zu einer anderen Resonanzfrequenz R2, bei der eine andere Schwingungsrichtung Y, vorzugsweise in eine Richtung rechtwinklig zur Schwingungsrichtung X bzw. tangential zur Zahnoberfläche generiert wird. Damit wechselt die Schwingungsrichtung von einer Richtung normal zum Zahn in eine Richtung tangential zum Zahn, so dass keine Dämpfung bzw. eine wesentlich kleinere Dämpfung auftritt. Ein Quotient Q1 von beispielsweise dem Impedanzwert IB1 zu dem Impedanzwert IL1 mit einem Wert von eins oder etwas mehr als eins entspricht dem Leerlauf. Sobald der Quotient Q1 einen Wert von mehr als zwei aufweist, entspricht dies einer starken Dämpfung bzw. Belastung, die erfindungsgemäß durch Wechsel der Resonanzfrequenz verhindert bzw. reduziert wird.

Anstelle des Quotienten Q1, Q2 kann auch eine Differenz zwischen dem Impedanzwert IB1 und dem Impedanzwert IL1 zur Bestimmung der Abweichung A1, A2 herangezogen werden. Der Quotient Q1, Q2 ist praktikabler, da er keine Einheit besitzt.

Erfindungsgemäß kann neben der Auswertung des Impedanzverlaufs |Z|(f) oder der Impedanzwerte auch die Phasenlage ϕ(f) oder die Phasenwerte zwischen dem Strom I und der Spannung U entsprechend ausgewertet werden, um die Abweichung A1, A2 oder den Quotienten Q1, Q2 zu bestimmen. Die Phasenlage ϕ(f) stellt auch ein Maß für die mechanische Belastung bzw. Dämpfung der Ultraschall-Werkzeugspitze dar.

Ergänzend kann es vorgesehen sein, einen Impedanzverlauf |Z|_{B}(f) bzw. eine Phasenlage ϕ_{B}(f) zwischen dem Strom I und der Spannung U für ein Frequenzband zu ermitteln und den Impedanzverlauf |Z|_{B}(f) bzw. die Phasenlage ϕ_{B}(f) mit einem im Leerlauf ermittelten Impedanzverlauf |Z|_{L}(f) bzw. einer im Leerlauf ermittelten Phasenlage ϕ_{B}(f) zu vergleichen, wobei diejenige Resonanzfrequenz R1, R2 als Ausgangsfrequenz eingestellt werden kann, bei der eine Abweichung A1, A2 zwischen dem Impedanzverlauf |Z|_{B}(f) bzw. der Phasenlage ϕ_{B}(f) und dem zugehörigen Impedanzverlauf |Z|_{L}(f) bzw. der zugehörigen Phasenlage ϕ_{B}(f) kleiner ist. Der Impedanzverlauf |Z|_{B}(f) bzw. die Phasenlage ϕ_{B}(f) stellt mehrere Werte für verschiedene Frequenzen, insbesondere um die jeweilige Resonanzfrequenz herum, zur Verfügung.

Dabei kann es von Vorteil sein, wenn die jeweiligen Impedanzwerte IB1, IB2 bzw. Phasenwerte ϕB1, ϕB2 für die sich unter Belastung einstellenden Resonanzfrequenzen R1', R2' ermittelt werden können und diejenige Resonanzfrequenz R1', R2' als Ausgangsfrequenz eingestellt werden kann, bei der die Abweichung A1, A2 oder der Quotient Q1, Q2, wie oben ausgeführt, am kleinsten ist. Die Werte für die Resonanzfrequenzen R1, R2 im Leerlauf und die Werte für die Resonanzfrequenzen R1', R2' im Belastungsfall unterscheiden sich etwas. Das führt auch zu einem veränderten Impedanzwert IB1, IB2, der bei der Ermittlung der Abweichung A1, A2 bzw. des Quotienten Q1, Q2 berücksichtigt werden kann.

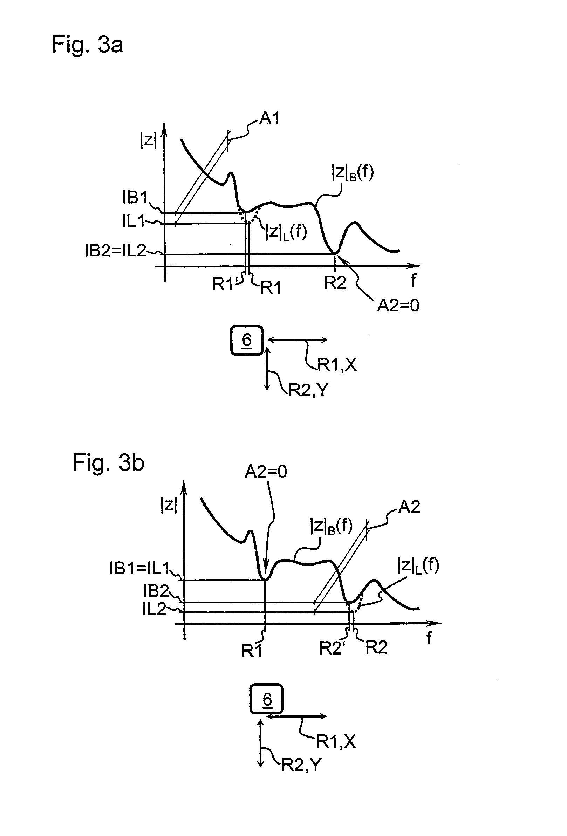

Hierbei kann es vorteilhaft sein, wenn diejenige Resonanzfrequenz R1 ermittelt wird, deren Quotient Q1 bzw. deren Abweichung A1 den größten Wert aufweist, und wenn die Resonanzfrequenz R2 als Ausgangsfrequenz eingestellt wird, deren zugehörige Schwingungsrichtung Y mit der Schwingungsrichtung X der Resonanzfrequenz R1 einen Winkel von mindestens 50° oder 90° einschließt (Ausführungsbeispiel Fig. 3a). Der Komplementärwinkel sollte höchstens 130° sein. Der Winkel bewegt sich dann zwischen den Grenzen 90°±40°. Die Schwingungsrichtung X, bei der der größte Quotient Q1 = IB1/IL1 ermittelt wird, schließt mit einer Flächennormalen der Zahnoberfläche, an der die Ultraschallspitze anliegt, den kleinsten Winkel ein. Sie hat also den größten Normalenanteil, so dass die Dämpfung und damit der Impedanzwert IB1 und der Quotient Q1 am größten sind. Wenn die Schwingungsrichtung X normal zu der Zahnoberfläche verläuft, wäre ein Winkel von 90° vorteilhaft, so dass die Schwingungsrichtung Y tangential zum Zahn verliefe.

Gemäß einer Weiterbildung kann der Vergleich der Impedanzwerte bzw. Phasenwerte und/oder die Einstellung der Resonanzfrequenz mit einer möglichst hohen Frequenz, also einer möglichst hohen Frequenzauflösung, vorzugsweise mit einer Frequenz zwischen 20 Hz und 200 Hz erfolgen. Somit kann gewährleistet werden, dass die an der Ultraschall-Werkzeugspitze anliegende Last mit ausreichender Auflösung überprüft und somit eine Verletzung des Zahns verhindert werden kann. Die somit erreichte Auflösung liegt sinnvollerweise zwischen 10 Hz und 500 Hz.

Ferner kann es vorteilhaft sein, wenn die Veränderung der Ausgangsfrequenz breitbandig in einem Frequenzbereich von 500 Hz um die Resonanzfrequenz erfolgt. In Abhängigkeit der eingesetzten Ultraschall-Werkzeugspitze und in Abhängigkeit der anliegenden Last kann die vorstehende Vorgehensweise insbesondere beim Vorhandensein mehrerer Resonanzfrequenzen vorteilhaft sein. Die breitbandige Anregung kann dabei mittels eines Dreieck- oder Rechtecksignals oder mittels einer Frequenzmodulation erfolgen, einer so genannten Chirp (FM).

Vorteilhaft kann es auch sein, wenn die Veränderung der Ausgangsfrequenz selektiv im Bereich der jeweiligen Resonanzfrequenzen R1, R2 erfolgt. Sofern die Resonanzfrequenzen R1, R2 bzw. R1', R2' unter Last bekannt sind, kann die unmittelbare selektive Auswahl der verschiedenen gewünschten Resonanzfrequenzen R1, R2, R1', R2' das effektivere Mittel im Vergleich zu vorstehend genannter Verfahrensweise betreffend die breitbandige Änderung sein.

Vorteilhafterweise kann die Regelungseinheit ein Warnsignal erzeugen, wenn der Quotient Q1, Q2 zwischen dem Impedanzwert IB und dem Impedanzwert IL einen Wert größer als 1,5 oder einen Wert zwischen 2 und 3 überschreitet. Somit kann der Anwender im Fall einer zu hohen Last bzw. einer Überlast rechtzeitig informiert werden und kann daraufhin die Bearbeitungskraft reduzieren, bis das System eine angepasste Bewegungsrichtung durch Wechsel der Resonanzfrequenz R1, R2 erreicht hat. Alternativ kann der Anwender durch Veränderung der relativen Position zwischen der Ultraschall-Werkzeugspitze und dem Zahn eine Ultraschallbewegung in Richtung normal zur Oberfläche desselben verhindern.

Die erfindungsgemäße dentale Ultraschallvorrichtung umfasst eine dreidimensional geformte, mindestens zwei Resonanzfrequenzen R1, R2 für unterschiedliche Schwingungsrichtungen X, Y aufweisende Werkzeugspitze, wobei die Regelungseinheit Mittel aufweist, die zur Erfassung der sich während des Einsatzes der Werkzeugspitze unter Belastung (Last) einstellenden Impedanzwerte IB1, IB2 bzw. Phasenwerte ϕB1, ϕB2, zur Ermittlung der sich im Leerlauf einstellenden Impedanzwerte IL1, IL2 bzw. Phasenwerte ϕL1, ϕL2 für die beiden Resonanzfrequenzen R1, R2, zum Vergleich des jeweiligen Impedanzwertes IB1, IB2 bzw. Phasenwertes ϕB1, ϕB2 mit dem zugehörigen Impedanzwert IL1, IL2 bzw. Phasenwert ϕL1, ϕL2, zur Einstellung derjenigen Resonanzfrequenz R1, R2 als Ausgangsfrequenz ausgebildet sind, bei der die Abweichung A1, A2 oder der Quotient Q1, Q2 zwischen dem Impedanzwert IB1, IB2 und dem zugehörigen Impedanzwert IL1, IL2 bzw. zwischen dem Phasenwert ϕL1, ϕL2 und dem Phasenwert ϕB1, ϕB2 am kleinsten ist.

Wenn die Bewegungs- bzw. Schwingungsrichtung der Ultraschall-Werkzeugspitze in eine Richtung normal zum Zahn erfolgt, so kommt es zu einer mechanischen Dämpfung für diese Resonanzamplitude bzw. zu einer Erhöhung der elektrischen Impedanz |Z| oder zu einer Verkleinerung der Phasenlage ϕ(f) für die entsprechende Resonanzfrequenz. Die Ermittlung des Dämpfungsverhaltens erfolgt mittels einer Fourier-Analyse des Frequenzverhaltens wie z. B. DFT, FFT oder Zoom-FFT.

Vorrichtungsseitig kann es vorteilhaft sein, wenn Mittel vorgesehen sind, über die die sich unter Belastung einstellenden Resonanzfrequenzen R1', R2' ermittelbar sind. Daneben kann es zwecks Ausnutzung der vollen Leistung der Ultraschallvorrichtung vorgesehen sein, anhand des Impedanzverlaufs |Z|(f) bzw. der Phasenlage ϕ(f) neben den Resonanzfrequenzen R1, R2 auch die jeweiligen Resonanzfrequenzen R1', R2' zu ermitteln und einzustellen. Alternativ könnte zwar auf die bereits ermittelten Leerlauf-Resonanzfrequenzen R1, R2 zurückgegriffen werden. Diese können jedoch um mehrere 100 Hz von dem exakten Wert R1', R2' abweichen.

Dabei kann es vorteilhaft sein, wenn das Handstück und/oder die Regelungseinheit ein Signalmittel aufweist, über das ein akustisches, optisches und/oder taktiles Signal generierbar ist, sobald die Abweichung A1, A2 oder der Quotient Q1, Q2 einen Wert von 2 überschreitet. Insbesondere ein taktiles Signal im Handstück kann ein möglichst schnelles Erkennen einer Überlast gewährleisten, wobei der Patient durch ein mögliches akustisches Signal nicht irritiert wird.

### Kurzbeschreibung der Zeichnungen

Das erfindungsgemäße Verfahren wird anhand der Zeichnungen erläutert. Es zeigen:
- Fig. 1: eine Prinzipskizze einer erfindungsgemäßen dentalen Ultraschallvorrichtung;
- Fig. 2: eine Impedanzkurve im Leerlauf;
- Fig. 3a: ein Diagramm über die Abhängigkeit des Betrages der Impedanz von einer Dämpfung;
- Fig. 3b: ein Diagramm über die Abhängigkeit des Betrages der Impedanz von einer Dämpfung;
- Fig. 4: ein Diagramm über die Abhängigkeit der Phase von einer Dämpfung.

### Ausführungsform der Erfindung

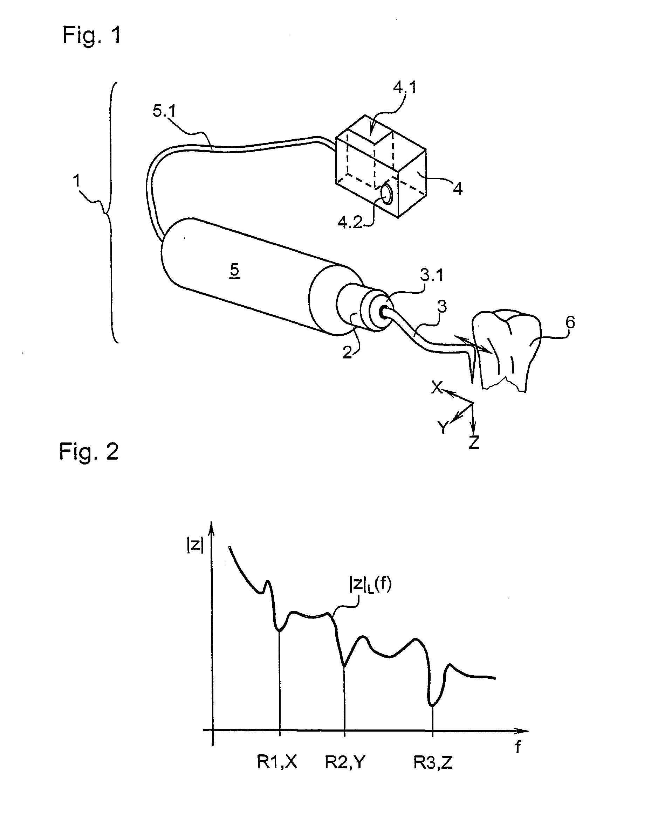

Fig. 1 zeigt eine Ultraschallvorrichtung 1 mit einem einen Ultraschallantrieb 2 aufweisenden Handstück 5. An dem Ultraschallantrieb 2 ist stirnseitig eine Werkzeugaufnahme 3.1 vorgesehen, in der eine dreidimensional geformte Werkzeugspitze 3 eingespannt ist, die an einem Zahn 6 anlegbar ist.

Das Handstück 5 ist über eine Versorgungsleitung 5.1 mit einer Regelungseinheit 4 verbunden. Die Regelungseinheit 4 weist hierbei verschiedene Mittel 4.1 zur Erfassung des Verlaufes einer sich während des Einsatzes der Werkzeugspitze 3 einstellenden Impedanz |Z|, Mittel 4.1 zum Vergleich des Verlaufs der Impedanz |Z| mit einer im Leerlauf ermittelten Impedanz |Z| sowie Mittel 4.1 zur Einstellung der gewünschten Resonanzfrequenz R1, R2 auf. Ferner weist die Regelungseinheit 4 ein Signalmittel 4.2 auf, welches beim Überschreiten einer an der Werkzeugspitze 3 auftretenden Überlast den Benutzer akustisch und/oder optisch informiert. Das Signalmittel 4.2 kann dabei auch am Handstück 5 angeordnet sein.

Fig. 2 zeigt einen Impedanzverlauf |Z|_{L}(f) in Abhängigkeit verschiedener Anregungsfrequenzen f im Leerlauf, also das Resonanzverhalten einer solchen dreidimensional geformten Werkzeugspitze 3. Die dreidimensional geformte Werkzeugspitze 3 weist mindestens drei Resonanzfrequenzen R1, R2 und R3 auf, die sich über den Impedanzverlauf |Z|_{L}(f) ermitteln lassen. Im Schaubild gemäß Fig. 2, bei dem die Impedanz |Z| über die Frequenz abgetragen ist, wird die mechanische Dämpfung als Anstieg der Impedanz |Z| in der jeweiligen Resonanz R1, R2, R3 erkennbar. Der jeweiligen Resonanzfrequenz R1, R2, R3 ist eine Schwingungsrichtung X, Y, Z der Werkzeugspitze 3 gemäß Fig. 1 zuzuordnen. Je nach Resonanzfrequenz R1, R2, R3 weist die Werkzeugspitze 3 demzufolge verschiedene Bewegungsrichtungen in die drei Raumrichtungen auf.

Bei der Behandlung eines Zahnes 6 gemäß Fig. 1 ist es notwendig, dass die Bewegungsrichtung der Werkzeugspitze 3 in dem Berührungspunkt zwischen der Werkzeugspitze 3 und der Zahnoberfläche des Zahns 6 in eine Richtung tangential zur Zahnoberfläche erfolgt. Gemäß Ausführungsbeispiel ist dies in Richtung X sowie in Richtung Z unter Vernachlässigung des in Richtung Z möglicherweise bestehenden radialen Schwingungsanteils aufgrund der Krümmung des Zahnhalses.

Unter Bezug auf die Darstellung des Resonanzverhaltens gemäß Fig. 2 zeigt Fig. 3a das Resonanzverhalten der Werkzeugspitze 3 unter Last bei zwei verschiedenen Resonanzfrequenzen R1 und R2, wobei die Resonanzfrequenz R1 an die Schwingungsrichtung X und die Resonanzfrequenz R2 an die Schwingungsrichtung Y gekoppelt ist. Neben einem Impedanzverlauf |Z|_{B}(f) unter Belastung (Last) ist zum Vergleich auch der Impedanzverlauf |Z|_{L}(f) im Leerlauf gestrichelt dargestellt. Aufgrund der relativen Position zwischen der Werkzeugspitze 3 und dem Zahn 6 erfolgt eine im Resonanzverlauf ersichtliche Dämpfung der Schwingung in dieser Bewegungsrichtung X, da die Bewegungsrichtung X der Werkzeugspitze 3 gemäß Prinzipskizze in radialer bzw. normaler Richtung zum Zahn 6 erfolgt und somit auf Grund der Belastung mechanisch gedämpft wird. Bei der Schwingungsrichtung Y, die bei der Resonanzfrequenz R2 angeregt wird, erfolgt die Bewegung relativ zum Zahn 6 in tangentialer Richtung, so dass keine oder eine nur sehr geringe Dämpfung der Werkzeugspitze 3 erfolgt. Es zeichnet sich das Leerlaufverhalten ab. Eine mechanische Dämpfung der Werkzeugspitze 3 ist in einem dargestellten Resonanzverlauf |Z|(f) durch eine Erhöhung eines Impedanzwertes IB1 im Bereich der zugehörigen Resonanzfrequenz R1 gemäß Fig. 3a wie mit Abweichung A1 gekennzeichnet erkennbar. Der Impedanzverlauf |Z|_{L}(f) ohne Dämpfung der Werkzeugspitze 3, also im Leerlaufverhalten, ist dabei gestrichelt dargestellt. Ein Impedanzwert IL1 der ungedämpften Werkzeugspitze 3 ist kleiner. Auf Grund der Dämpfung erfolgt eine leichte Veränderung bzw. ein Abfall der Resonanzfrequenz R1' gegenüber der Resonanzfrequenz R1 im Leerlauf. Der Abfall beträgt in der Regel weniger als 500 Hz. Die Abweichung A1 beträgt also |Z|_{B}(R1') - |Z|_{L}(R1).

Bei der Schwingungsrichtung Y, die bei der Resonanzfrequenz R2 angeregt wird, liegt keine Dämpfung vor. Die Abweichung A2 ist gleich Null. Die Impedanzwerte IL2 und IB2 sind identisch. Eine Veränderung der Resonanzfrequenz R2 liegt demnach ebenfalls nicht vor.

Im Ausführungsbeispiel gemäß Fig. 3b ist der korrespondierende Fall betreffend die Schwingungsrichtungen X und Y dargestellt. In diesem Fall verläuft die Schwingungsrichtung Y der Werkzeugspitze 3 in radialer bzw. normaler Richtung zum Zahn 6, so dass bei der Resonanzfrequenz R2 eine mechanische Dämpfung der Werkzeugspitze 3 und damit eine Erhöhung des zugehörigen Impedanzwertes IL2 auf den Impedanzwert IB2 und eine Verschiebung der Resonanzfrequenz R2 auf die Resonanzfrequenz R2' erfolgt. Die Abweichung A2 beträgt |Z|_{B}(R2') - |Z|_{L}(R2) Die Schwingungsrichtung X verläuft in tangentialer Richtung zum Zahn 6, so dass die Werkzeugspitze 3 in Richtung X ungedämpft ist, also der Impedanzverlauf |Z|_{B}(f) dem Impedanzverlauf |Z|_{L}(f) im Leerlauf entspricht. Die Abweichung A1 ist gleich Null.

Durch Vergleich des Resonanz- bzw. Impedanzverhaltens unter Last mit dem Verhalten im Leerlauf ist somit über Mittel 4.1 der Regelungseinheit 4 eine Auswertung dahingehend möglich, ob und in welchem Maß die Werkzeugspitze 3 in radialer bzw. normaler Richtung zum Zahn 6 bewegt wird. Sobald der Anteil der normalen Richtung zum Zahn 6 zu groß wird, wird die Resonanzfrequenz R1, R2 entsprechend geändert, so dass eine weitestgehend tangentiale Bewegung zum Zahn 6 erfolgt. In jedem Fall wird die Resonanzfrequenz R1, R2 als Ausgangsfrequenz eingestellt, deren Schwingungsrichtung X den geringsten Anteil einer Richtung normal zur Zahnoberfläche aufweist. Hierzu werden für die beiden Resonanzfrequenzen die Quotienten Q1, Q2 des jeweiligen Impedanzwertes IB1, IB2 zu dem zugehörigen Impedanzwert IL1, IL2 gebildet. Die Resonanzfrequenz R1, R2 bei der der kleinste bzw. kleinere Quotient Q1, Q2 und somit die geringste Dämpfung vorliegt, wird als Ausgangsfrequenz gewählt, so dass die Schwingungsrichtung X, Y generiert wird, deren tangentialer Bewegungsanteil mit Bezug zum Zahn 6 am größten ist.

Bei der tangentialen Bewegung kann es sich neben der in Fig. 1 dargestellten geradlinigen Bewegung in Richtung X ebenfalls um eine überlagerte Bewegung in die Richtungen X und Z, also z. B. um eine plane Kreisbewegung handeln. Weitere Überlagerungen der zur Verfügung stehenden Richtungen X, Y, Z sind ebenfalls vorgesehen.

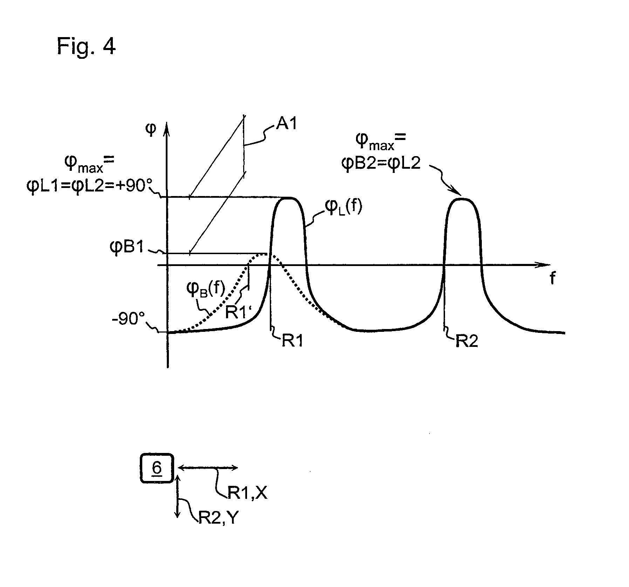

Daneben ist es wie in Fig. 4 dargestellt möglich, anstelle der Impedanz |Z| als Größe für die vorliegende Dämpfung die Phase ϕ bzw. den Phasenverlauf ϕ(f) zwischen dem Strom I und der Spannung U heranzuziehen. Bei Vorliegen einer mechanischen Dämpfung wird die maximale Phase ϕₘₐₓ kleiner und es ergeben sich entsprechende Abweichungen A1, A2 des Phasenverlaufs ϕ(f) im Vergleich zum Leerlaufprozess. Die Abweichung A1, A2 des Phasenverlaufs ϕ_{L}(f) im Leerlauf zu dem Phasenverlauf ϕ_{B}(f) unter Belastung (Last) bzw. die Differenz zwischen den entsprechenden maximalen Phasenwerten ϕL1, ϕL2 im Leerlauf und ϕB1, ϕB2 unter Last werden entsprechend der vorstehend beschriebenen Vorgehensweise betreffend die Impedanz |Z| ausgewertet. Zu berücksichtigen ist, dass der Phasenwert unter Last, entgegengesetzt zur Impedanz |Z|, kleiner wird. Die Resonanzfrequenz R1 sinkt im Falle der Belastung wie vorgehend schon beschrieben auf die Resonanzfrequenz R1' ab. Grundsätzlich ist die Phase ϕ bei der Resonanzfrequenz R1, R1' etwa Null und steigt anschließend an, so dass die der Abweichung A1, A2 zu Grunde liegenden Maxima der Phasenwerte ϕ bei einer Frequenz f vorliegen, die größer ist als die jeweilige Resonanzfrequenz R1, R1'.

Der in Fig. 4 dargestellte Verlauf des Phasenwinkels ϕ (f) entspricht der Situation gemäß Fig. 3a. Auf die Ausführungen zu Fig. 3a wird explizit verwiesen. Der Phasenverlauf ϕ(f) steigt im Leerlauf von einem stark negativen Wert von -90° auf einen stark positiven Wert, maximal bis +90° an. In der Resonanzfrequenz R1, R2 ist die Phase etwa Null. Im Lastfall steigt der maximale Phasenwinkel ϕ(f) deutlich weniger, lediglich auf den Wert ϕB1 an, der beispielsweise etwa 30° beträgt. Die Abweichung A1 beträgt somit etwa 60°.

Für die Schwingungsrichtung X liegt die größte mechanische Dämpfung vor, so dass erfindungsgemäß von der Resonanzfrequenz R1 auf die Resonanzfrequenz R2 gewechselt wird.

Für die Belastungssituation der Werkzeugspitze 3 gemäß Fig. 3b ergibt sich der Verlauf des Phasenwinkels ϕ (f) analog.

### Bezugszeichenliste

- 1: Ultraschallvorrichtung
- 2: Ultraschallantrieb
- 3: Werkzeugspitze
- 3.1: Werkzeugaufnahme
- 4: Regelungseinheit
- 4.1: Mittel
- 4.2: Signalmittel
- 5: Handstück
- 5.1: Versorgungsleitung
- 6: Zahn
- A1: Abweichung
- A2: Abweichung
- f: Anregungsfrequenzen
- I: Strom
- IB1: Impedanz unter Belastung (Last)
- IB2: Impedanz unter Belastung (Last)
- IL1: Impedanz im Leerlauf (ohne Last)
- IL2: Impedanz im Leerlauf (ohne Last)
- ϕ: Phase, Phasenwinkel
- ϕ(f): Phasenverlauf, Phasenlage
- ϕ_{L}(f): Phasenverlauf
- ϕ_{B}(f): Phasenverlauf
- ϕB1: Phasenwert
- ϕB2: Phasenwert
- ϕL1: Phasenwert
- ϕL2: Phasenwert
- Q1: Quotient
- Q2: Quotient
- R1: Resonanzfrequenzen im Leerlauf (ohne Last)
- R2: Resonanzfrequenzen im Leerlauf (ohne Last)
- R3: Resonanzfrequenzen im Leerlauf (ohne Last)
- R1': Resonanzfrequenzen unter Belastung
- R2': Resonanzfrequenzen unter Belastung
- U: Spannung
- X: Schwingungsrichtung
- Y: Schwingungsrichtung
- Z: Schwingungsrichtung
- |Z|: Impedanz
- |Z|(f): Impedanzverlauf
- |Z|_{L}(f): Impedanzverlauf im Leerlauf
- |Z|_{B}(f): Impedanzverlauf unter Belastung (Last)

## Patentansprüche

1. Verfahren zum Betrieb einer dentalen Ultraschallvorrichtung (1), umfassend ein Handstück (5), einen Ultraschallantrieb (2) mit einer veränderbaren Ausgangsfrequenz, eine von dem Ultraschallantrieb (2) antreibbare Werkzeugspitze (3) und umfassend eine Regelungseinheit (4), die zur Regelung der Ausgangsfrequenz des Ultraschallantriebes (2) dient, **dadurch gekennzeichnet, dass**
a) zwei sich unter Belastung während des Einsatzes der dreidimensional geformten, zwei Resonanzfrequenzen R1, R2 für unterschiedliche Schwingungsrichtungen X, Y aufweisenden Werkzeugspitze (3) einstellende Impedanzwerte IB1, IB2 des Ultraschallantriebs (2) für die zwei Resonanzfrequenzen R1, R2 der Werkzeugspitze (3) ermittelt werden,
b) die Impedanzwerte IB1, IB2 mit jeweiligen für die beiden Resonanzfrequenzen R1, R2 im Leerlauf ermittelten Impedanzwerten IL1, IL2 verglichen werden,
c) diejenige Resonanzfrequenz R1, R2 als Ausgangsfrequenz eingestellt wird, bei der eine Abweichung A1, A2 zwischen dem Impedanzwert IB1, IB2 und dem zugehörigen Impedanzwert IL1, IL2 kleiner ist oder diejenige Resonanzfrequenz R1, R2 als Ausgangsfrequenz eingestellt wird, bei der ein Quotient Q1, Q2 des jeweiligen Impedanzwertes IB1, IB2 zu dem zugehörigen Impedanzwert IL1, IL2 am kleinsten ist.

2. Verfahren nach Anspruch 1, **dadurch gekennzeichnet, dass** ergänzend zu den Impedanzwerten IB1, IB2 ein Impedanzverlauf |Z|_{B}(F) für ein Frequenzband ermittelt wird und der Impedanzverlauf |Z|_{B} (f) mit einem im Leerlauf ermittelten Impedanzverlauf |Z|_{L} (f) verglichen wird, wobei diejenige Resonanzfrequenz R1, R2 als Ausgangsfrequenz eingestellt wird, bei der eine Abweichung A1, A2 zwischen dem Impedanzverlauf |Z[_{B}(f) und dem zugehörigen Impedanzverlauf |Z|_{L}(f) kleiner ist.

3. Verfahren zum Betrieb einer dentalen Ultraschallvorrichtung (1), umfassend ein Handstück (5), einen Ultraschallantrieb (2) mit einer veränderbaren Ausgangsfrequenz, eine von dem Ultraschallantrieb (2) antreibbare Werkzeugspitze (3) und umfassend eine Regelungseinheit (4), die zur Regelung der Ausgangsfrequenz des Ultraschallantriebes (2) dient, **dadurch gekennzeichnet, dass**
a) zwei sich während des Einsatzes der dreidimensional geformten, zwei Resonanzfrequenzen R1, R2 für unterschiedliche Schwingungsrichtungen X, Y aufweisenden Werkzeugspitze (3) unter Belastung einstellende Phasenwerte ϕB1, ϕB2 zwischen dem Strom I und der Spannung U des Ultraschallantriebs (2) für die zwei Resonanzfrequenzen R1, R2 erfasst werden,
b) die Phasenwerte ϕB1, ϕB2 mit zumindest zwei für die beiden Resonanzfrequenzen R1, R2 im Leerlauf ermittelten Phasenwerten ϕL1, ϕL2 verglichen werden,
c) diejenige Resonanzfrequenz R1, R2 als Ausgangsfrequenz eingestellt wird, bei der eine Abweichung A1, A2 zwischen dem Phasenwert ϕB1, ϕB2 und dem zugehörigen Phasenwert ϕL1, ϕL2 kleiner ist, oder diejenige Resonanzfrequenz R1, R2 als Ausgangsfrequenz eingestellt wird, bei der der Quotient Q1, Q2 des jeweiligen Phasenwertes ϕL1, ϕL2 zu dem zugehörigen Phasenwert ϕB1, ϕB2 am kleinsten ist.

4. Verfahren nach Anspruch 3, **dadurch gekennzeichnet, dass** ergänzend zu den Phasenwerten ϕB1, ϕB2 eine Phasenlage ϕ_{B}(f) für ein Frequenzband ermittelt wird und die Phasenlage ϕ_{B}(f) mit einer im Leerlauf ermittelten Phasenlage ϕ_{L}(t) verglichen wird, wobei diejenige Resonanzfrequenz R1, R2 als Ausgangsfrequenz eingestellt wird, bei der eine Abweichung A1, A2 zwischen der Phasenlage ϕ_{B}(f) und der zugehörigen Phasenlage ϕ_{L}(f) kleiner ist.

5. Verfahren nach einem der Ansprüche 1 bis 4, **dadurch gekennzeichnet, dass**
d) in Schritt b) die jeweiligen Impedanzwerte IB1, IB2 oder Phasenwerte ϕB1, ϕB2 für die sich unter Belastung einstellenden Resonanzfrequenzen R1', R2' ermittelt werden,
e) in Schritt c) diejenige Resonanzfrequenz R1', R2' als Ausgangsfrequenz eingestellt wird, bei der die Abweichung A1, A2 am kleinsten ist, oder
f) diejenige Resonanzfrequenz R1', R2' als Ausgangsfrequenz eingestellt wird, bei der der jeweilige Quotient Q1, Q2 am kleinsten ist.

6. Verfahren nach einem der Ansprüche 1 bis 5, **dadurch gekennzeichnet, dass**
g) in Schritt c) diejenige Resonanzfrequenz R1 ermittelt wird, deren zugehörige Abweichung A1 oder deren zugehöriger Quotient Q1 den größten Wert aufweist,
h) die Resonanzfrequenz R2 als Ausgangsfrequenz eingestellt wird, deren zugehörige Schwingungsrichtung Y mit der Schwingungsrichtung X der Resonanzfrequenz R1 einen Winkel von 90°±40° einschließt.

7. Verfahren nach einem der Ansprüche 1 bis 6, **dadurch gekennzeichnet, dass** der Vergleich nach Schritt b) und/oder die Einstellung nach Schritt c) mit einer Frequenz zwischen 20 Hz und 200 Hz erfolgt.

8. Verfahren nach einem der Ansprüche 1 bis 7, **dadurch gekennzeichnet, dass** die Veränderung der Ausgangsfrequenz breitbandig in einem Frequenzbereich von 500 Hz um die Resonanzfrequenz erfolgt.

9. Verfahren nach einem der Ansprüche 1 bis 8, **dadurch gekennzeichnet, dass** die Regelungseinheit (4) ein Warnsignal generiert, wenn der Quotient Q1, Q2 einen Wert von 2 oder 3 überschreitet.

10. Dentale Ultraschallvorrichtung (1), umfassend ein Handstück (5), einen Ultraschallantrieb (2) mit einer veränderbaren Ausgangsfrequenz, eine Werkzeugaufnahme (3.1) für eine von dem Ultraschallantrieb (2) antreibbare Werkzeugspitze (3) und eine Regelungseinheit (4), die zur Regelung der Ausgangsfrequenz des Ultraschallantriebes (2) dient, **dadurch gekennzeichnet, dass**
a) die Werkzeugspitze (3) dreidimensional geformt ist und mindestens zwei Resonanzfrequenzen R1, R2 für unterschiedliche Schwingungsrichtungen X, Y aufweist,
b) die Regelungseinheit (4) Mittel (4.1) aufweist, die
i) zur Erfassung der sich während des Einsatzes der Werkzeugspitze (3) unter Belastung einstellenden Impedanzwerte IB1, IB2 für die zwei Resonanzfrequenzen R1, R2 ausgebildet sind,
ii) zur Ermittlung der sich im Leerlauf einstellenden Impedanzwerte IL1, IL2 für die beiden Resonanzfrequenzen R1, R2 ausgebildet sind,
iii) zum Vergleich des jeweiligen Impedanzwertes IB1, IB2 mit dem zugehörigen Impedanzwert IL1, IL2 ausgebildet sind,
iv) zur Einstellung derjenigen Resonanzfrequenz R1, R2 als Ausgangsfrequenz ausgebildet sind, bei der die Abweichung A1, A2 oder der Quotient Q1, Q2 zwischen dem Impedanzwert IB1, IB2 und dem zugehörigen Impedanzwert IL1, IL2 am kleinsten ist.

11. Dentale Ultraschallvorrichtung (1), umfassend ein Handstück (5), einen Ultraschallantrieb (2) mit einer veränderbaren Ausgangsfrequenz, eine Werkzeugaufnahme (3.1) für eine von dem Ultraschallantrieb (2) antreibbare Werkzeugspitze (3) und umfassend eine Regelungseinheit (4), die zur Regelung der Ausgangsfrequenz des Ultraschallantriebes (2) dient, **dadurch gekennzeichnet, dass**
a) die Werkzeugspitze (3) dreidimensional geformt ist und mindestens zwei Resonanzfrequenzen R1, R2 für unterschiedliche Schwingungsrichtungen X, Y aufweist,
b) die Regelungseinheit (4) Mittel (4.1) aufweist, die
i) zur Erfassung der sich während des Einsatzes der Werkzeugspitze (3) unter Belastung einstellenden Phasenwerte ϕB1, ϕB2 zwischen dem Strom I und der Spannung U des Ultraschallantriebs (2) für die zwei Resonanzfrequenzen R1, R2 ausgebildet sind,
ii) zur Ermittlung der sich im Leerlauf einstellenden Phasenwerte ϕL1, ϕL2 für die beiden Resonanzfrequenzen R1, R2 ausgebildet sind,
iii) zum Vergleich des jeweiligen Phasenwertes ϕB1, ϕB2 mit dem zugehörigen Impedanzwert ϕL1, ϕL2 ausgebildet sind,
iv) zur Einstellung derjenigen Resonanzfrequenz R1, R2 als Ausgangsfrequenz ausgebildet sind, bei der eine Abweichung A1, A2 oder der Quotient Q1, Q2 zwischen dem Phasenwert ϕL1, ϕL2 und dem zugehörigen Phasenwert ϕB1, ϕB2 am kleinsten ist.

12. Dentale Ultraschallvorrichtung (1) nach Anspruch 10 oder 11, **dadurch gekennzeichnet, dass** Mittel (4.1) vorgesehen sind, über die die sich unter Belastung einstellenden Resonanzfrequenzen R1', R2' ermittelbar sind.

13. Dentale Ultraschallvorrichtung (1) nach Anspruch 10, 11 oder 12, **dadurch gekennzeichnet, dass** das Handstück (5) und/oder die Regelungseinheit (4) ein Signalmittel (4.2) aufweist, über das ein akustisches, optisches und/oder taktiles Signal generierbar ist.

## Claims

1. A method for operating an ultrasonic dental apparatus (1), comprising a handpiece (5), an ultrasonic drive (2) having a variable output frequency, a tool tip (3) that can be driven by the ultrasonic drive (2) and comprises a control unit (4) which serves to control the output frequency of the ultrasonic drive (2), **characterized in that**
a) two impedance values IB1, IB2 of the ultrasonic drive (2) for the two resonant frequencies R1, R2 of the tool tip (3) are determined, these impedance values being used to adjust a tool tip (3) having a three-dimensional shape with two resonant frequencies R1, R2 for different oscillation directions X, Y under load during use of the tool tip,
b) the impedance values IB1, IB2 are compared with the respective impedance values IL1, IL2 determined for the two resonant frequencies R1, R2 in idling,
c) the resonant frequency R1, R2 is set as the output frequency, at which a deviation A1, A2 between the impedance value IB1, IB2 and the corresponding impedance value IL1, IL2 is smaller, or the resonant frequency R1, R2 is set as the output frequency, at which a quotient Q1, Q2 of the respective impedance value IB1, IB2 to the corresponding impedance value IL1, IL2 is the smallest.

2. The method according to claim 1, **characterized in that** in addition to the impedance value IB1, IB2, an impedance curve |Z|_{B}(f) for a frequency band is determined, and the impedance curve |Z|_{B}(F) is compared with an impedance curve |Z|_{L} (f) determined in idling, the resonant frequency R1, R2 being set as the output frequency, at which the deviation A1, A2 between the impedance curve |Z|_{B}(f) and the corresponding impedance curve |Z|_{L}(F) is smaller.

3. The method for operating an ultrasonic dental apparatus (1), comprising a handpiece (5), an ultrasonic drive (2) having a variable output frequency, a tool tip (3) that can be driven by the ultrasonic drive (2) and comprising a control unit (4) that serves to control the output frequency of the ultrasonic drive (2), **characterized in that**
a) two phase values ϕB1, ϕB2 between the current I and the voltage U of the ultrasonic drive (2) are determined for the two resonant frequencies R1, R2, these phase values having been established under load during the use of the three-dimensionally shaped tool tip (3) having two resonant frequencies R1, R2 for different oscillation directions X, Y,
b) the phase values ϕB1, ϕB2 are each compared with at least two phase values ϕL1, ϕL2, which are determined for the two resonant frequencies R1, R2 during idling,
c) the resonance frequency R1, R2 is set as the output frequency at which a deviation A1, A2 between the phase value ϕB1, ϕB2 and the corresponding phase value ϕL1, ϕL2 is smaller, or the resonant frequency R1, R2 is set as the output frequency at which the quotient Q1, Q2 of the respective phase value ϕL1, ϕL2 to the corresponding phase value ϕB1, ϕB2 is the smallest.

4. The method according to claim 3, **characterized in that**, in addition to the phase values ϕB1, ϕB2, a phase relation ϕ_{B}(f) for frequency band is determined, and the phase relation ϕ_{B}(f) is compared with a phase relation ϕ_{L}(f) determined in idling, the resonant frequency R1, R2 being set as the output frequency at which a deviation A1, A2 between the phase relation ϕ_{B}(f) and the corresponding phase relation ϕ_{L}(f) is smaller.

5. The method according to any one of claims 1 to 4, **characterized in that**
d) in step b), the respective impedance values IB1, IB2 or phase values ϕB1, ϕB2 are determined for the resonant frequencies R1', R2' established under load,
e) in step c), the resonant frequency R1', R2' is set as the output frequency at which the deviation A1, A2 is the smallest, or
f) the resonant frequency R1', R2' is set as the output frequency at which the respective quotient Q1, Q2 is the smallest.

6. The method according to any one of claims 1 to 5, **characterized in that**
g) in step c), the resonant frequency R1, the corresponding deviation A1 of which or the corresponding quotient Q1 of which has the largest value, is determined,
h) the resonant frequency R2 is set as the output frequency, the corresponding oscillation direction Y of which forms an angle of 90° ± 40° with the oscillation direction X of the resonant frequency R1.

7. The method according to any one of claims 1 to 6, **characterized in that** the comparison according to step b) and/or the setting according to step c) is/are performed at a frequency between 20 Hz and 200 Hz.

8. The method according to any one of claims 1 to 7, **characterized in that** the change in the output frequency takes place in a broad band around the resonant frequency in a frequency range from 500 Hz.

9. The method according to any one of claims 1 to 8, **characterized in that** the control unit (4) generates a warning signal when the quotient Q1, Q2 exceeds a value of 2 or 3.

10. An ultrasonic dental apparatus (1), comprising a handpiece (5), an ultrasonic drive (2) with a variable output frequency, a tool receptacle (3.1) for a tool tip (3) that can be driven by the ultrasonic drive (2) and a control unit (4) that serves to control the output frequency of the ultrasonic drive (2), **characterized in that**
a) the tool tip (3) has a three-dimensional shape and has at least two resonant frequencies R1, R2 for different oscillation directions X, Y,
b) the control unit (4) has means (4.1) which
i) are designed for detecting the impedance values IB1, IB2 for the two resonant frequencies R1, R2 established during use of the tool tip (3) under load,
ii) are designed for determining the impedance values IZ1, IL2 for the two resonant frequencies R1, R2 established in idling,
iii) are designed for comparing the respective impedance value IB1, IB2 with the corresponding impedance value IL1, IL2,
iv) are designed for adjusting the resonant frequency R1, R2 as the output frequency at which the deviation A1, A2 or the quotient Q1, Q2 between the impedance value IB1, IB2 and the corresponding impedance value IL1, IL2 is the smallest.

11. The ultrasonic dental apparatus (1), comprising a handpiece (5), an ultrasonic drive (2) with a variable output frequency, a tool receptacle (3.1) for a tool tip (3) that is drivable by the ultrasonic drive (2) and comprises a control unit (4) that serves to control the output frequency of the ultrasonic drive (2), **characterized in that**
a) the tool tip (3) has a three-dimensional shape and has at least two resonant frequencies R1, R2 for different oscillation directions X, Y,
b) the control unit (4) has means (4.1) which
i) are designed for detecting the phase values ϕB1, ϕB2 between the current I and the voltage U of the ultrasonic drive (2) for the two resonant frequencies R1, R2, such that these phase values are set during the use of the tool tip (3) under load,
ii) are designed for determining the phase values ϕL1, ϕL2 for the two resonant frequencies R1, R2 that are set in idling,
iii) are designed for comparing the respective phase value ϕB1, ϕB2 with the corresponding impedance value ϕL1, ϕL2,
iv) are designed for setting the resonant frequency R1, R2 as the output frequency at which a deviation A1, A2 or the quotient Q1, Q2 between the phase value ϕL1, ϕL2 and the corresponding phase value ϕB1, ϕB2 is the smallest.

12. The ultrasonic dental apparatus (1) according to claim 10 or 11, **characterized in that** means (4.1) are provided by which the resonant frequencies R1', R2' that are set under load can be determined.

13. The ultrasonic dental apparatus (1) according to claims 10, 11 or 12, **characterized in that** the handpiece (5) and/or control unit (4) has signal means (4.2) by which an acoustic, optical and/or tactile signal can be generated.

## Revendications

1. Procédé de fonctionnement d'un dispositif dentaire à ultrasons (1), comprenant une pièce à main (5), un mécanisme de commande à ultrasons (2) doté d'une fréquence de sortie variable, une pointe d'outil (3) pouvant être commandée par le mécanisme de commande à ultrasons (2) et comprenant une unité de régulation (4), qui sert à la régulation de la fréquence de sortie du mécanisme de commande à ultrasons (2), **caractérisé en ce que**
a) on détermine deux valeurs d'impédance IB1, IB2 du mécanisme d'entraînement à ultrasons (2) qui se règlent, sous charge, pendant l'utilisation de la pointe d'outil (3) tridimensionnelle, présentant deux fréquences de résonance R1, R2 pour les différentes directions d'oscillation X, Y, pour les deux fréquences de résonance R1, R2 de la pointe d'outil (3),
b) on compare les valeurs d'impédance IB1, IB2 aux valeurs d'impédance IL1, IL2 respectives déterminées, lors d'un fonctionnement à vide, pour les deux fréquences de résonance R1, R2,
c) on règle, comme fréquence de sortie, la fréquence de résonance R1 ou R2 à laquelle une différence A1, A2 entre la valeur d'impédance IB1, IB2 et la valeur d'impédance IL1, IL2 associée est plus petite ou, comme fréquence de sortie, la fréquence de résonance R1 ou R2 à laquelle un quotient Q1, Q2 de la valeur d'impédance IB1 ou IB2 à la valeur d'impédance IL1, IL2 associée est le plus petit.

2. Procédé selon la revendication 1, **caractérisé en ce qu'**on détermine, en plus des valeurs d'impédance IB1, IB2, une allure d'impédance |Z|_{B} (f) pour une bande de fréquence et on compare l'allure d'impédance |Z|_{B}(F) à une allure d'impédance |Z|_{L}(F) déterminée lors d'un fonctionnement à vide, en réglant, comme fréquence de sortie, la fréquence de résonance R1 ou R2 à laquelle une différence A1, A2 entre l'allure d'impédance |Z|_{B}(f) et l'allure d'impédance |Z|_{L}(f) associée est plus petite.

3. Procédé de fonctionnement d'un dispositif dentaire à ultrasons (1), comprenant une pièce à main (5), un mécanisme de commande à ultrasons (2) doté d'une fréquence de sortie variable, une pointe d'outil (3) pouvant être commandée par le mécanisme de commande à ultrasons (2) et comprenant une unité de régulation (4), qui sert à la régulation de la fréquence de sortie du mécanisme de commande à ultrasons (2), **caractérisé en ce que**
a) on enregistre deux valeurs de phase ϕB1, ϕB2 qui se règlent, sous charge, pendant l'utilisation de la pointe d'outil (3) tridimensionnelle, présentant deux fréquences de résonance R1, R2, pour des directions d'oscillation différentes X, Y entre le courant I et la tension U du mécanisme de commande à ultrasons (2) pour les deux fréquences de résonance R1, R2
b) on compare les valeurs de phase ϕB1, ϕB2 à au moins deux valeurs de phase ϕL1, ϕL2 déterminées pour les deux fréquences de résonance R1, R2 lors d'un fonctionnement à vide,
c) on règle, comme fréquence de sortie, la fréquence de résonance R1 ou R2 à laquelle une différence A1, A2 entre la valeur de phase ϕB1, ϕB2 et la valeur de phase ϕL1, ϕL2 associée est plus petite ou, comme fréquence de sortie, la fréquence de résonance R1 ou R2 à laquelle le quotient Q1, Q2 de la valeur de phase ϕL1, ϕL2 à la valeur de phase associée ϕB1, ϕB2 est le plus petit.

4. Procédé selon la revendication 3, **caractérisé en ce que**, en plus des valeurs de phase ϕB1, ϕB2, on détermine une position de phase ϕ_{B}(f) pour une bande de fréquence et on compare la position de phase ϕ_{B}(f) à une position de phase ϕ_{L}(f) déterminée lors d'un fonctionnement à vide et on règle, comme fréquence de sortie, la fréquence de résonance R1 ou R2 à laquelle une différence A1, A2 entre la position de phase ϕ_{B}(f) et la position de phase ϕ_{L}(f) associée est plus petite.

5. Procédé selon l'une des revendications 1 à 4, **caractérisé en ce que**
d) on détermine, dans l'étape b), les valeurs d'impédance IB1, IB2 ou les valeurs de phase ϕB1, ϕB2 pour les fréquences de résonance R1', R2' qui se règlent sous charge,
e) on règle, dans l'étape c), comme fréquence de sortie, la fréquence de résonance R1' ou R2' à laquelle la différence A1, A2 est la plus petite ou
f) on règle, comme fréquence de sortie, la fréquence de résonance R1' ou R2' à laquelle le quotient Q1, Q2 est le plus petit.

6. Procédé selon l'une des revendications 1 à 5, **caractérisé en ce que**
g) dans l'étape c), on détermine la fréquence de résonance R1 dont la différence A1 associée ou le quotient Q1 associé présente la valeur la plus grande,
h) on règle, comme fréquence de sortie, la fréquence de résonance R2 dont la direction d'oscillation Y associée forme un angle 90° ± 40° avec la direction d'oscillation X de la fréquence de résonance R1.

7. Procédé selon l'une des revendications 1 à 6, **caractérisé en ce que** la comparaison selon l'étape b) et/ou le réglage selon l'étape c) est/sont réalisé(e)(s) à une fréquence entre 20 Hz et 200 Hz.

8. Procédé selon l'une des revendications 1 à 7, **caractérisé en ce que** la variation de la fréquence de sortie est réalisée sur une large bande dans une plage de fréquences de 500 Hz autour de la fréquence de résonance.

9. Procédé selon l'une des revendications 1 à 8, **caractérisé en ce que** l'unité de régulation (4) génère un signal d'avertissement lorsque le quotient Q1, Q2 dépasse une valeur de 2 ou 3.

10. Dispositif dentaire à ultrasons (1), comprenant une pièce à main (5), un mécanisme de commande à ultrasons (2) doté d'une fréquence de sortie variable, un logement d'outil (3.1) pour une pointe d'outil (3) pouvant être commandée par le mécanisme de commande à ultrasons (2) et une unité de régulation (4), qui sert à la régulation de la fréquence de sortie du mécanisme de commande à ultrasons (2), **caractérisé en ce que** a) la pointe d'outil (3) est tridimensionnelle et présente au moins deux fréquences de résonance R1, R2 pour les différentes directions d'oscillation X, Y, b) l'unité de régulation (4) présente des moyens (4.1), qui
i) sont conçus pour enregistrer les valeurs d'impédance IB1, IB2 pour les deux fréquences de résonance R1, R2 qui se règlent pendant l'utilisation de la pointe d'outil (3) sous charge,
ii) sont conçus pour déterminer les valeurs d'impédance IL1, IL2 pour les deux fréquences de résonance R1, R2 qui se règlent lors d'un fonctionnement à vide,
iii) sont conçus pour la comparaison de la valeur d'impédance IB1 ou IB2 à la valeur d'impédance IL1, IL2 associée,
iv) sont conçus pour régler, comme fréquence de sortie, la fréquence de résonance R1 ou R2 à laquelle la différence A1, A2 ou le quotient Q1, Q2 entre la valeur d'impédance IB1, IB2 et la valeur d'impédance IL1, IL2 associée est la/le plus petit(e).

11. Dispositif dentaire à ultrasons (1), comprenant une pièce à main (5), un mécanisme de commande à ultrasons (2) doté d'une fréquence de sortie variable, un logement d'outil (3.1) pour une pointe d'outil (3) pouvant être commandée par le mécanisme de commande à ultrasons (2) et comprenant une unité de régulation (4), qui sert à la régulation de la fréquence de sortie du mécanisme de commande à ultrasons (2), **caractérisé en ce que**
a) la pointe d'outil (3) est tridimensionnelle et présente au moins deux fréquences de résonance R1, R2 pour des directions d'oscillation X, Y différentes,
b) l'unité de régulation (4) présente des moyens (4.1) qui
i) sont conçus pour enregistrer les valeurs de phase ϕB1, ϕB2 qui se règlent pendant l'utilisation de la pointe d'outil (3) sous charge entre le courant I et la tension U du mécanisme de commande à ultrasons (2) pour les deux fréquences de résonance R1, R2,
ii) sont conçus pour la détermination des valeurs de phase ϕL1, ϕL2 pour les deux fréquences de résonance R1, R2 qui se règlent lors d'un fonctionnement à vide,
iii) sont conçus pour la comparaison de la valeur de phase ϕB1 ou ϕB2 à la valeur d'impédance ϕL1, ϕL2 associée,
iv) sont conçus pour régler, comme fréquence de sortie, la fréquence de résonance R1 ou R2 à laquelle une différence A1, A2 ou le quotient Q1, Q2 entre la valeur de phase ϕL1, ϕL2 et la valeur de phase ϕB1, ϕB2 associée est la/le plus petit(e).

12. Dispositif dentaire à ultrasons (1) selon la revendication 10 ou 11, **caractérisé en ce qu'**il présente des moyens (4.1) qui permettent de déterminer les fréquences de résonance R1', R2' qui se règlent sous charge.

13. Dispositif dentaire à ultrasons (1) selon la revendication 10, 11, ou 12, **caractérisé en ce que** la pièce à main (5) et/ou l'unité de régulation (4) présente un moyen de signalisation (4.2) qui permet de générer un signal acoustique, optique et/ou tactile.
